# FASCICULE DE BREVET EUROPEEN

(11) **EP 2 232 121 B1**
(45) Date de publication et mention de la délivrance du brevet: **30.03.2011**
(21) Numéro de dépôt: 08866822.3
(22) Date de dépôt: 13.11.2008
(51) Int. Cl.: F16L 37/098, F16L 37/084

(54) **DISPOSITIF DE RACCORDEMENT D'UN EMBOUT CYLINDRIQUE RIGIDE A UN TUYAU REALISE DANS UN MATERIAU DEFORMABLE**
VORRICHTUNG ZUR VERBINDUNG EINES STARREN ZYLINDRISCHEN ANSCHLUSSSTÜCKS AN EIN ROHR AUS VERFORMBAREM MATERIAL
DEVICE FOR CONNECTING A RIGID CYLINDRICAL FITTING TO A TUBE MADE OF A DEFORMABLE MATERIAL

(30) Priorité: 26.11.2007 FR 0759287
(43) Date de publication de la demande: 29.09.2010
(73) Titulaire: Renault S.A.S., 92100 Boulogne-Billancourt (FR)
(72) Inventeur: OUATIK, Ali, F-78310 Coignières (FR)
(86) Numéro de dépôt international: PCT/EP2008/065501
(87) Numéro de publication internationale: WO 2009/083332

(56) Documents cités:
- EP-A- 1 205 333
- GB-A- 1 191 438
- GB-A- 1 201 854
- US-A1- 2006 022 461

## Description

L'invention concerne un dispositif de raccordement comportant un embout cylindrique, qui est réalisé dans un matériau rigide, et un tuyau, qui est réalisé dans un matériau déformable. Plus précisément, l'embout cylindrique est issu d'un climatiseur de véhicule automobile et le tuyau souple est conçu pour évacuer la condensation issue du climatiseur.

En effet, l'appareil de climatisation d'un véhicule automobile génère de la condensation qui est évacuée vers l'extérieur du véhicule par l'intermédiaire d'un tuyau traversant le plancher.

L'emmanchement de ce tuyau d'évacuation sur un embout cylindrique du climatiseur s'effectue sur le point le plus bas du climatiseur, ce qui le rend particulièrement inaccessible. Le tuyau d'évacuation de la condensation est donc maintenu en position sur l'embout à l'aide d'un évidement pratiqué sur le tube d'évacuation et apte à recevoir une nervure présente sur la surface extérieure de l'embout cylindrique.

Actuellement, le positionnement de la nervure dans l'évidement du tuyau d'évacuation s'effectue difficilement puisque l'opérateur peut soit aligner la nervure et l'évidement visuellement de manière à les solidariser rapidement ensemble ou soit le faire à l'aveugle s'il ne peut pas visualiser cette zone du climatiseur. C'est le cas notamment dans le document GB 1 191 438, qui décrit un dispositif de raccordement conforme au préambule de la revendication indépendante.

Ceci procure de nombreux inconvénients. En effet, le temps d'assemblage des deux pièces, à savoir le tuyau d'évacuation et l'embout cylindrique, du fait qu'il ne s'agit pas d'une manipulation aisée, peut être long et ainsi retarder une chaîne de montage.

Pour pallier ces inconvénients, l'invention propose un dispositif de raccordement comportant un embout cylindrique, qui est réalisé dans un matériau rigide, et un tuyau, qui est réalisé dans un matériau déformable, ledit embout comprenant une nervure de maintien en position apte à coopérer avec un évidement dudit tuyau pour bloquer en translation le tuyau sur ledit embout, ledit tuyau comportant, à son extrémité destinée à coopérer avec l'embout, un logement, en amont de l'évidement et en saillie par rapport à sa surface extérieure, comportant une ouverture par laquelle la nervure s'insère avant la solidarisation complète des deux pièces, caractérisé en ce que le logement présente une paroi latérale plus longue qu'une autre disposée parallèlement pour constituer un moyen de blocage en rotation de la nervure contre la paroi latérale la plus longue avant l'insertion dans le logement.

Selon les caractéristiques préférées de l'invention :
- le tuyau en matériau déformable est découpé en biseau au niveau de son extrémité destinée à entrer en contact avec l'embout, de manière à ce que le logement présente une paroi latérale plus longue que l'autre,
- dans le fond du logement, se trouve une languette apte à se déformer au cours du passage de la nervure de sa position d'insertion dans le logement à sa position finale de solidarisation des deux pièces,
- la surface de la nervure apte à entrer en contact avec la languette est inclinée, de manière à ce que la languette du tuyau d'évacuation glisse sur cette surface,
- l'angle d'inclinaison de la surface de la nervure est de 50° par rapport à une horizontale,
- la nervure présente une surface de blocage orthogonale à la surface extérieure de l'embout, de manière à ce que, après insertion de la nervure déformée dans l'évidement, la languette retrouve sa position non déformée initiale et constitue donc un moyen de blocage, lorsque la nervure se trouve en contact avec la surface de blocage,
- l'embout cylindrique appartient à un climatiseur de véhicule automobile,
- le tuyau est un tuyau d'évacuation de la condensation issue du climatiseur.

D'autres caractéristiques et avantages de l'invention apparaîtront clairement à la lecture de la description suivante de deux modes de réalisation non limitatifs de celle-ci, en liaison avec les dessins annexés sur lesquels :

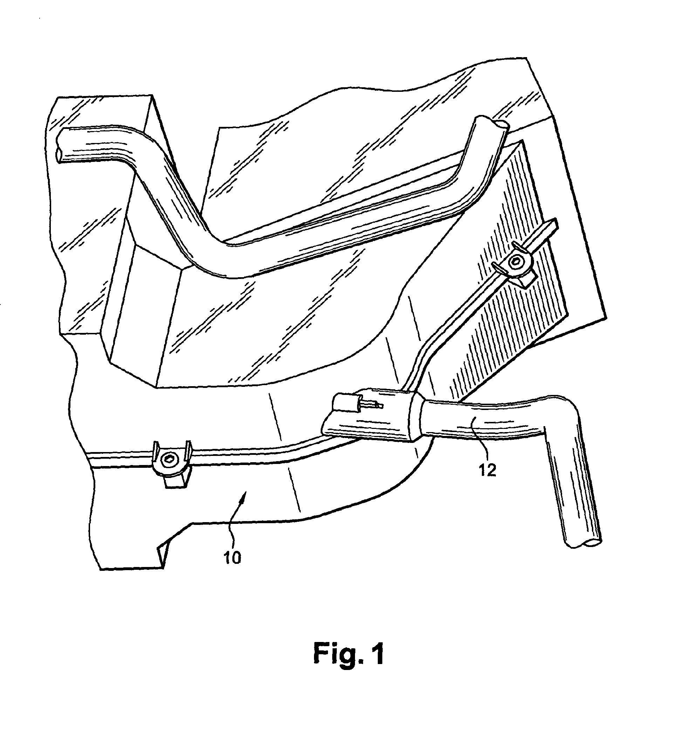

- la figure 1 représente une vue en perspective du climatiseur de véhicule automobile muni du tuyau d'évacuation de la condensation selon l'invention,
- la figure 2 représente une coupe lors du début de l'emmanchement de la nervure de l'embout dans le logement du tuyau d'évacuation selon l'invention,
- la figure 3 représente une vue en perspective de la coupe de la figure 2,
- la figure 4 représente une coupe lors de la butée de la nervure sur la languette dans le fond du logement du tuyau d'évacuation selon l'invention,
- la figure 5 représente une vue en perspective de la coupe de la figure 4,

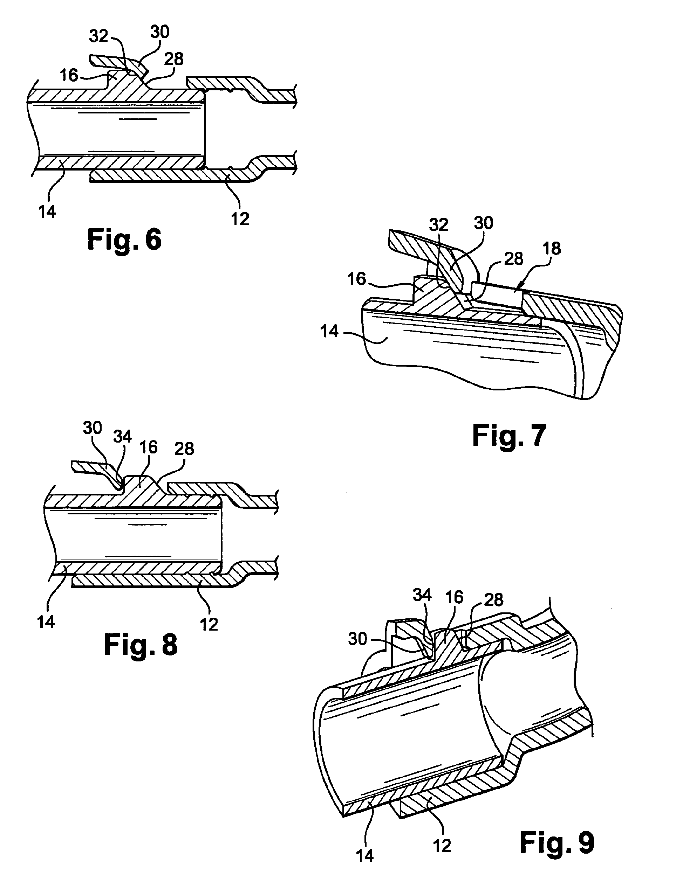

- la figure 6 représente une coupe lorsque la languette du tuyau d'évacuation selon l'invention est déformée par le passage de la nervure jusqu'à sa position finale de blocage en translation,
- la figure 7 représente une vue en perspective de la coupe de la Figure 6,
- la figure 8 représente une coupe du tuyau d'évacuation selon l'invention bloqué en translation sur l'embout cylindrique du climatiseur, et
- la figure 9 représente une vue en perspective de la coupe de la figure 8.

Dans la description qui va suivre, des éléments identiques, similaires ou analogues seront désignés par les mêmes chiffres de référence.

En référence aux figures, l'invention divulgue un climatiseur 10 de véhicule automobile qui génère de la condensation devant être évacuée vers l'extérieur du véhicule par l'intermédiaire d'un tuyau 12 d'évacuation traversant le plancher.

Classiquement, un embout cylindrique 14 se trouve au niveau du bas du climatiseur pour y fixer le tuyau d'évacuation 12.

L'embout cylindrique 14 constitue une partie mâle, qui est réalisée dans un matériau rigide, et présente une nervure 16 en saillie sur sa surface extérieure. La nervure 16 est apte à coopérer avec un évidement 18 réalisé sur le tuyau d'évacuation 12 pour maintenir les deux pièces en position.

Le tuyau d'évacuation 12 constitue une partie femelle, qui est réalisée dans un matériau souple déformable tel que du caoutchouc. En amont de l'évidement 18, il présente un logement 20 sensiblement en forme de « U » apte à recevoir la nervure 16. Ce logement comporte une ouverture 26 apte à permettre l'insertion de la nervure 16 dans le logement 18 et deux parois latérales : une paroi latérale longue 22 et une paroi latérale courte 24. En effet, la paroi latérale longue 22 sera utilisée en tant que moyen de blocage en rotation de la nervure 16 pour l'aligner avec l'évidement 18 du tuyau d'évacuation 12. Ceci procure l'avantage de faciliter la mise en référence de la nervure 16 par rapport au tuyau d'évacuation 12 et permet ainsi de rendre plus aisée et plus rapide la tâche d'emmanchage du tuyau d'évacuation 12 sur l'embout 14.

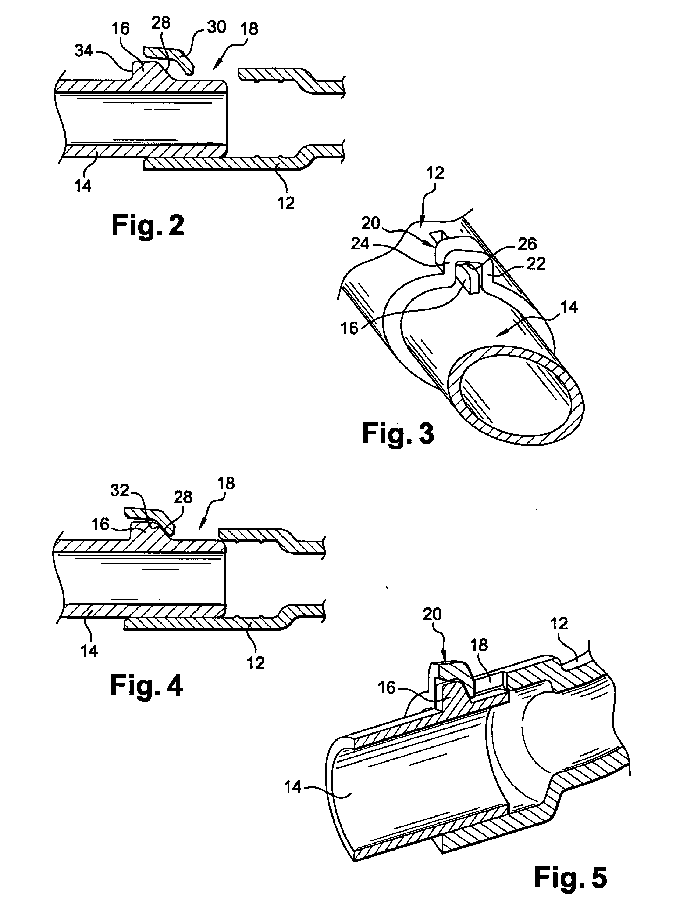

Selon l'invention, le tuyau d'évacuation 12 est biseauté au niveau de son extrémité destinée à entrer en contact avec l'embout 14, de manière à ce que le logement 20 présente cette paroi latérale longue 22 et cette paroi latérale courte 24, tel qu'illustré sur la figure 3. Mais, il convient de remarquer qu'il pourrait être découpé de tout forme, de manière à ce que le logement 20 présente une paroi latérale longue et une paroi latérale courte.

Au fond de ce logement, dont la longueur de paroi la plus longue 22 présente selon notre mode de réalisation une longueur sensiblement identique à celle de la nervure 16, se trouve une languette 30 déformable par l'action d'une force dans le sens d'introduction de la nervure 16 dans l'évidement 18. De manière à faciliter l'introduction de la nervure 16 dans l'évidement 18, la nervure 16 présente une surface d'insertion 28 inclinée, ladite surface 28 entrant au contact de la languette 30 dans le sens d'introduction. De préférence, l'angle d'inclinaison de la surface d'insertion 28 est de 50° par rapport à une horizontale. Selon l'invention, la languette 30 est inclinée de manière à ce que la surface d'insertion 28 glisse contre la surface 32 de la languette 30 en contact direct avec la surface 28. Ainsi, le passage en force de la languette 30 avec la nervure 16 s'effectue aisément.

Par ailleurs, afin de bloquer en translation la nervure 16 dans l'évidement 18 du tuyau d'évacuation 12, la nervure 16 présente une surface 34 de blocage orthogonale à la surface extérieure de l'embout 14. En effet, après insertion de la nervure 16 dans l'évidement 18, la languette 30 retrouve sa position non déformée initiale et constitue donc un moyen de blocage lorsque celle-ci se trouve en contact avec la surface 34 de blocage en translation de la nervure 16. Selon le mode de réalisation de l'invention, l'évidement 18 présente sensiblement la même longueur que la nervure 16.

Ainsi, selon l'invention, un opérateur souhaitant fixer le tuyau d'évacuation 12 sur l'embout 14 :
- emmanchera le tuyau 12 sur l'embout 14,
- entraînera le tuyau 12 en rotation jusqu'à ce que la nervure 16 entre en contact avec la paroi latérale 22 la plus longue du logement 20,
- fera glisser la nervure 16 contre cette paroi dans le sens d'introduction de la nervure 16 dans l'évidement 18, et
- fera passer en force la nervure 16 contre la languette 30 dans ledit évidement 18.

Après ces étapes, le tuyau d'évacuation 12 sera parfaitement maintenu en position sur l'embout cylindrique 14.

Ainsi, l'invention présente un nouveau dispositif de raccordement 10 d'un tuyau d'évacuation 12 souple sur un embout cylindrique 14 rigide de climatiseur comportant des moyens de mise en référence procurant des avantages par rapport à l'art antérieur.

## Revendications

1. Dispositif de raccordement comportant un embout cylindrique (14), qui est réalisé dans un matériau rigide, et un tuyau (12), qui est réalisé dans un matériau déformable, ledit embout (14) comprenant une nervure (16) de maintien en position apte à coopérer avec un évidement (18) dudit tuyau (12) pour bloquer en translation le tuyau (12) sur ledit embout (14), ledit tuyau (12) comportant, à son extrémité destinée à coopérer avec l'embout (14), un logement (20), en amont de l'évidement (18) et en saillie par rapport à sa surface extérieure, comportant une ouverture (26) par laquelle la nervure (16) s'insère avant la solidarisation complète des deux pièces (14, 12), **caractérisé en ce que** le logement (20) présente une paroi latérale (22) plus longue qu'une autre (24) disposée parallèlement pour constituer un moyen de blocage en rotation de la nervure (16) contre la paroi latérale la plus longue (22) avant l'insertion dans le logement (20).

2. Dispositif de raccordement selon la revendication 1, **caractérisé en ce que** le tuyau (12) en matériau déformable est découpé en biseau au niveau de son extrémité destinée à entrer en contact avec l'embout (14), de manière à ce que le logement (20) présente une paroi latérale plus longue que l'autre.

3. Dispositif de raccordement selon l'une des revendications précédentes, **caractérisé en ce que**, dans le fond du logement (20), se trouve une languette (30) apte à se déformer au cours du passage de la nervure (16) de sa position d'insertion dans le logement (20) à sa position finale de solidarisation des deux pièces (12, 14).

4. Dispositif de raccordement selon la revendication 3, **caractérisé en ce que** la surface (28) de la nervure (16) apte à entrer en contact avec la languette (30) est inclinée, de manière à ce que la languette (30) du tuyau (12) d'évacuation glisse sur cette surface.

5. Dispositif de raccordement selon la revendication 4, **caractérisé en ce que** l'angle d'inclinaison de la surface de la nervure (16) est de 50° par rapport à une horizontale.

6. Dispositif de raccordement selon l'une des revendications 3 à 5, **caractérisé en ce que** la nervure (16) présente une surface de blocage (34) orthogonale à la surface extérieure de l'embout (14), de manière à ce que, après insertion de la nervure (16) déformée dans l'évidement (18), la languette (30) retrouve sa position non déformée initiale et constitue donc un moyen de blocage, lorsque la nervure (16) se trouve en contact avec la surface de blocage (34).

7. Dispositif de raccordement selon l'une quelconque des revendications précédentes, **caractérisé en ce que** l'embout cylindrique (14) appartient à un climatiseur (10) de véhicule automobile.

8. Dispositif de raccordement selon l'une quelconque des revendications précédentes, **caractérisé en ce que** le tuyau (12) est un tuyau d'évacuation de la condensation issue du climatiseur (10).

## Claims

1. Connecting device having a cylindrical end fitting (14), which is made of a rigid material, and a pipe (12), which is made of a deformable material, said end fitting (14) comprising a position-maintaining rib (16) that is able to engage with a recess (18) in said pipe (12) in order to lock the pipe (12) in translation on said end fitting (14), said pipe (12) having, at its end intended to engage with the end fitting (14), a housing (20), upstream of the recess (18) and protruding from its outer surface, having an opening (26) through which the rib (16) is inserted before the two components (14, 12) are secured together completely, **characterized in that** the housing (20) has one side wall (22) that is longer than another side wall (24) arranged parallel thereto in order to form a means for locking the rib (16) in rotation against the longer side wall (22) before it is inserted into the housing (20).

2. Connecting device according to Claim 1, **characterized in that** the pipe (12) made of deformable material is bevelled at its end intended to come into contact with the end fitting (14), such that the housing (20) has one side wall that is longer than the other.

3. Connecting device according to either of the preceding claims, **characterized in that** located at the bottom of the housing (20) is a tab (30) that is able to deform while the rib (16) passes from its position of insertion into the housing (20) to its final position securing the two components (12, 14) together.

4. Connecting device according to Claim 3, **characterized in that** the surface (28) of the rib (16) that is able to come into contact with the tab (30) is inclined such that the tab (30) of the discharge pipe (12) slides on this surface.

5. Connecting device according to Claim 4, **characterized in that** the angle of inclination of the surface of the rib (16) is 50° with respect to the horizontal.

6. Connecting device according to one of Claims 3 to 5, **characterized in that** the rib (16) has a locking surface (34) at right angles to the outer surface of the end fitting (14), such that, after the deformed rib (16) has been inserted into the recess (18), the tab (30) returns to its non-deformed initial position and thus forms a locking means when the rib (16) is in contact with the locking surface (34).

7. Connecting device according to any one of the preceding claims, **characterized in that** the cylindrical end fitting (14) is part of a motor vehicle air conditioner (10).

8. Connecting device according to any one of the preceding claims, **characterized in that** the pipe (12) is a pipe for discharging the condensation from the air conditioner (10).

## Patentansprüche

1. Verbindungsvorrichtung mit einem zylindrischen Ansatzstück (14), das aus einem starren Material hergestellt ist, und einem Rohr (12), das aus einem verformbaren Material hergestellt ist, wobei das Ansatzstück (14) eine Positionshalterippe (16) aufweist, die mit einer Aussparung (18) des Rohrs (12) zusammenwirken kann, um das Rohr (12) an dem Ansatzstück (14) translatorisch zu verriegeln, wobei das Rohr (12) an seinem Ende, das mit dem Ansatzstück (14) zusammenwirken soll, eine Aufnahme (20) vor der Aussparung (18), die in Bezug auf seine äußere Oberfläche vorsteht, mit einer Öffnung (26), in die die Rippe (16) vor der vollständigen festen Verbindung der zwei Teile (14, 12) eingesetzt wird, aufweist, **dadurch gekennzeichnet, dass** die Aufnahme (20) eine Seitenwand (22) aufweist, die länger ist als eine andere (24), die parallel angeordnet ist, um ein Mittel zum rotatorischen Verriegeln der Rippe (16) an der längeren Seitenwand (22) vor dem Einsetzen in die Aufnahme (20) zu bilden.

2. Verbindungsvorrichtung nach Anspruch 1, **dadurch gekennzeichnet, dass** das Rohr (12) aus verformbarem Material auf der Höhe seines Endes, das mit dem Ansatzstück (14) in Kontakt treten soll, schräg abgeschnitten ist, so dass die Aufnahme (20) eine Seitewand aufweist, die länger ist als die andere.

3. Verbindungsvorrichtung nach einem der vorangehenden Ansprüche, **dadurch gekennzeichnet, dass** sich im Boden der Aufnahme (20) eine Lasche (30) befindet, die sich im Verlauf des Übergangs der Rippe (16) von ihrer Einsetzposition in der Aufnahme (20) in ihre Endposition zur festen Verbindung der zwei Teile (12, 14) verformen kann.

4. Verbindungsvorrichtung nach Anspruch 3, **dadurch gekennzeichnet, dass** die Oberfläche (28) der Rippe (16), die mit der Lasche (30) in Kontakt treten kann, geneigt ist, so dass die Lasche (30) des Abführungsrohrs (12) auf dieser Oberfläche gleitet.

5. Verbindungsvorrichtung nach Anspruch 4, **dadurch gekennzeichnet, dass** der Neigungswinkel der Oberfläche der Rippe (16) 50° in Bezug auf eine Horizontale ist.

6. Verbindungsvorrichtung nach einem der Ansprüche 3 bis 5, **dadurch gekennzeichnet, dass** die Rippe (16) eine Verriegelungsoberfläche (34) aufweist, die zur äußeren Oberfläche des Ansatzstücks (14) senkrecht ist, so dass nach dem Einsetzen der verformten Rippe (16) in die Aussparung (18) die Lasche (30) ihre anfängliche nicht verformte Position wieder erlangt und folglich ein Verriegelungsmittel bildet, wenn die Rippe (16) mit der Verriegelungsoberfläche (34) in Kontakt steht.

7. Verbindungsvorrichtung nach einem der vorangehenden Ansprüche, **dadurch gekennzeichnet, dass** das zylindrische Ansatzstück (14) zu einer Klimaanlage (10) eines Kraftfahrzeugs gehört.

8. Verbindungsvorrichtung nach einem der vorangehenden Ansprüche, **dadurch gekennzeichnet, dass** das Rohr (12) ein Rohr zum Abführen der von der Klimaanlage (10) stammenden Kondensation ist.
